# EUROPEAN PATENT SPECIFICATION

(11) **EP 1 271 857 B1**
(45) Date of publication and mention of the grant of the patent: **30.03.2005**
(21) Application number: 01401594.5
(22) Date of filing: 18.06.2001
(51) Int. Cl.: H04L 12/56

(54) **Network-unit, method and computer program product for indicating the quality of a packet flow**
Netzwerkeinheit, Verfahren und Computerprogrammprodukt zur Anzeige der Qualität eines Stroms von Paketen
Unité de réseau, méthode et produit de programme d'ordinateur pour l'ndication de la qualité d'un flux de paquet

(43) Date of publication of application: 02.01.2003
(73) Proprietor: ALCATEL, 75008 Paris (FR)
(72) Inventor: Soetens, Timothy Luc Nancy, 3140 Keerbergen (BE); de Cnodder, Stefaan Jozef, 2275 Lille (BE)
(74) Representative: Narmon, Gisèle Marie Thérèse

(56) References cited:
- EP-A- 0 944 209
- EP-A- 1 032 179
- US-A- 6 006 264
- YEOM I ET AL: "Marking for QoS improvement" COMPUTER COMMUNICATIONS, ELSEVIER SCIENCE PUBLISHERS BV, AMSTERDAM, NL, vol. 24, no. 1, 1 January 2001 (2001-01-01), pages 35-50, XP004227540 ISSN: 0140-3664

## Description

The invention relates to a network-unit for in response to a flow signal comprising packet signals generating an indication signal defining a quality for said flow signal, which network-unit comprises a detector for detecting a specifier in said flow signal and a generator for generating said indication signal in dependence of said specifier.

Such a network-unit is known from US 6,154,776, which discloses a network access server, a QoS (Quality of Service) server and a directory server, together or each one of them for example forming a network-unit. A QoS definition (indication signal) binds the flow with a QoS, for a particular flow (which for example is identified by a specifier like a classifier, an identifier, an address of a source and/or a destination etc.).

Generally, the network-unit can be for example an edge router, an access router, and/or an e-commerce web server. During a session, comprising one or more flow signals, each flow signal comprising one or more packets, a user for example is visiting a web site, with each mouse click for example corresponding with a flow signal, resulting in the visiting of a next page of this web site.

The known network-unit is disadvantageous, inter alia, due to treating a session statically.

A content-aware flow switch is also described in US-A-6006264, with Date of Patent December 21, 1999. Herein it is described that a content aware flow switch intercepts a client content request in an IP network, and transparently directs the content request to a best-fit server. The best-fit server is chosen based on the type of content request, the quality of service requirements implied by the content request, the degree of load on available servers, network congestion information, and the proximity of the client to available servers. The flow switch detects client-server flows based on the arrival of TCP SYNs and/or HTTP GET's from the client. Hereby the flow switch implicitly deduces the quality of service requirements of a flow based on the content of the flow. Furthermore, it is described in claim 26 and claim 28 of this document that the expected quality of service provided by a server is descriptive of whether the server is receiving a burst of requests for the content being requested by the client, or whether the content requested by the client has been frequently requested in the past. In this way the number of times i.e. the frequency by which a particular content from a server is requested is taken into account.

However, such prior art solutions do not reward loyal visitors of the server.

It is an object of the invention, inter alia, of providing a network-unit which treats each session dynamically and which takes into account session histories and previous flow signals.

The network-unit according to the invention is characterised in that said network-unit comprises a memory for storing flow-information, with said generator being coupled to said memory for generating said indication signal further in dependence of flow-information of at least one previous flow signal and taking into account session histories and previous flow signals.

By providing the network-unit with said memory, within one session now flows can be treated individually. As a result, when a session gets a longer duration, flows can be given a higher quality, and the number of flows can be compared with a threshold, with the exceeding of this threshold (and/or the going below this threshold) resulting in certain measures.

The invention is based on the insight, inter alia, that loyal visitors should be rewarded, and that the number of actions during visiting can result in further rewards (or punishments), dependently upon this number.

The invention solves the problem, inter alia, of providing a network-unit which allows each session to be treated dynamically.

It should be noted that US 6,154,776 also provides a dynamical environment, however just in response to a detection of an instance of a new entity. It does not disclose the taking into account of session histories and previous flow signals (whereby flow information of at least one previous flow signal not necessarily corresponds with one foregoing, preceding flow signal but generally corresponds with at least a part of the information about one or more of many flow signals flown in the past).

A first embodiment of the network-unit according to the invention is characterised in that said network-unit comprises an adjustor for in response to said indication signal adjusting a quality indicator in said flow signal.

Such an adjustor for example comprises a meter (AF class or delay) and/or a marker (color or loss). In this case the flow signal comprises the quality indicator (AF class, color) in a so-called Diffserv environment.

A second embodiment of the network-unit according to the invention is characterised in that said network-unit comprises a requestor for in response to said indication signal requesting a certain quality for said flow signal.

Such a requestor for example comprises a QoS engine (configured by a configuration signal). In this case the flow signal does not comprise the quality indicator (configuration signal) in a so-called Intserv environment, but this configuration signal is supplied to the QoS engine for configuration purposes (like making a reservation for a certain amount of bandwidth).

A third embodiment of the network-unit according to the invention is characterised in that said flow-information comprises information about a number of flow signals per session.

In this case, when a session gets a longer duration, flows can be given a higher quality, loyal visitors should be rewarded.

A fourth embodiment of the network-unit according to the invention is characterised in that said flow-information comprises information about a number of flow signals per time-interval in a session.

In this case, the number of flows can be compared with a threshold, with the exceeding of this threshold (and/or the going below this threshold) resulting in certain measures, the number of actions during visiting can result in rewards (or punishments), dependently upon this number.

A fifth embodiment of the network-unit according to the invention is characterised in that a quality comprises a delay factor and a loss factor.

In this case a maximum number of rules, conditions and preferences has become available for treating sessions individually.

The invention further relates to a method for in response to a flow signal comprising packet signals generating an indication signal defining a quality for said flow signal, which method comprises a first step of detecting a specifier in said flow signal and a second step of generating said indication signal in dependence of said specifier.

The method according to the invention is characterised in that said method comprises a third step of storing flow-information, with said generating of said indication signal further being in dependence of flow-information of at least one previous flow signal.

A first embodiment of the method according to the invention is characterised in that said flow-information comprises information about a number of flow signals per session.

A second embodiment of the method according to the invention is characterised in that said flow-information comprises information about a number of flow signals per time-interval.

The invention also relates to a computer program product for in response to a flow signal comprising packet signals generating an indication signal defining a quality for said flow signal, which computer program product comprises a first function of detecting a specifier in said flow signal and a second function of generating said indication signal in dependence of said specifier.

The computer program product is characterised in that said computer program product comprises a third function of storing flow-information, with said generating of said indication signal further being in dependence of flow-information of at least one previous flow signal.

US 6,154,776 discloses a network access server, a QoS (Quality of Service) server and a directory server, together or each one of them for example forming a network-unit. A QoS definition (indication signal) binds the flow with a QoS, for a particular flow (which for example is identified by a specifier like a classifier, an identifier, an address etc.). Although US 6,154,776 also provides a dynamical environment, this is just in response to a detection of an instance of a new entity. US 6,205,149 discloses a quality of service control mechanism and apparatus. Neither one of both documents discloses the taking into account of session histories and previous flow signals. All references are considered to be incorporated in this patent application, as background information.

The invention will be further explained more detailledly at the hand of drawings, whereby
figure 1 discloses a network-unit according to the invention comprising a detector, a generator and a memory, and
figure 2 discloses a flow chart illustrating a method according to the invention and a computer program product according to the invention.

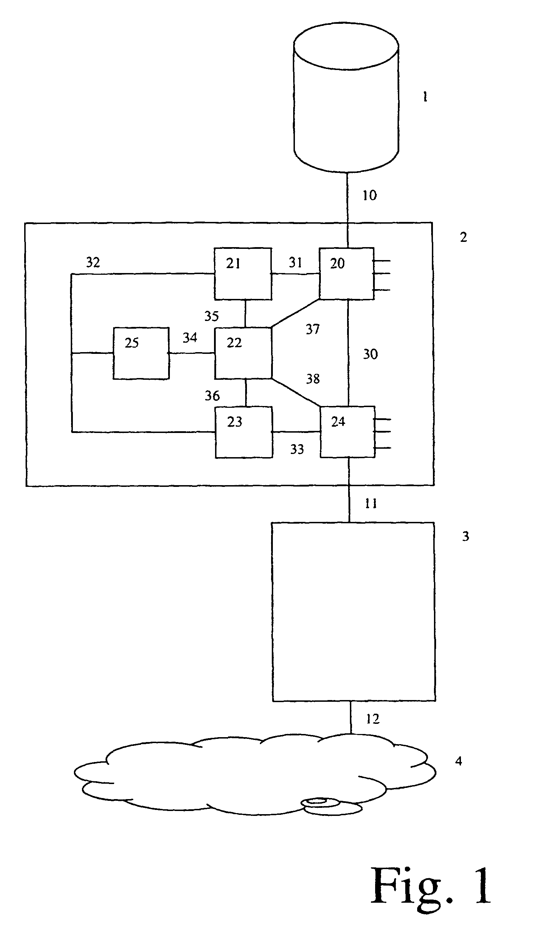

Figure 1 discloses an e-commerce web server 1 coupled via a connection 10 to an access router 2, which is coupled via a connection 11 to an edge router 3, which is coupled via a connection 12 to an Int(e)r(a)net 4, to which many terminals not shown are coupled via switches not shown. Access router 2 comprises a first buffer/switch 20 coupled to connection 10 and coupled via a connection 30 to a second buffer/switch 24 which is coupled to connection 11. Buffer/switch 20 is coupled via a connection 31 to a detector 21, which is coupled to a bus 32. Buffer/switch 24 is coupled via a connection 33 to a generator 23, which is further coupled to bus 32. Access router 2 further comprises a processor 22 coupled via a control connection 37 to buffer/switch 20 and via a control connection 38 to buffer/switch 24 and via a control connection 35 to detector 21 and via a control connection 36 to generator 23 and via a control connection 34 to a memory 25, which is further coupled to bus 32.

In this case access router 2 corresponds with a network-unit according to the invention comprising said detector, generator and memory, but generally web server 1 and edge router 3 may also correspond with this network-unit, when comprising said detector, generator and memory, and said web server 1, access router 2 and edge router 3, as well as other switches, bridges, gateways etc., and even residential gateways, pc's, modems etc. may comprise the network-unit according to the invention comprising said detector, generator and memory.

The network-unit according to the invention comprising the detector, generator and memory functions as follows.

According to a first embodiment, a user sitting behind his pc not shown and coupled to the Int(e)r(a)net 4 is visiting a web site on web server 1 via edge router 3 and access router 2. Each time said user makes a mouse click, control information flows from pc to web server 1 via edge router 3 and access router 2, and in response a flow signal comprising packet signals flows from web server 1 to pc via access router 2 and edge router 3. In access router 2, (at least a part of) said flow signal is buffered in buffer/switch 20. Processor 22 is informed via control connection 37, and controls detector 21 via control connection 35 in such a way that detector 21 starts detecting an specifier in said flow signal. Such a specifier for example corresponds with a classifier, an identifier, an address of a source or a destination, and can be found in each packet signal at certain byte locations, whereby either each packet signal comprises the entire specifier or subsequent packet signals of a flow signal comprise subsequent parts of a specifier. Detector 21 informs processor 22 via control connection 35 of said detection, and supplies said specifier to bus 32. Via control connection 36, processor 22 controls generator 23 in such a way that generator 23 reads the specifier from bus 32 and in response generates an indication signal, which via connection 33 is supplied to buffer/switch 24.

In the mean time, processor 22 has controlled buffer/switch 20 via control connection 37 and buffer/switch 24 via control connection 38 in such a way that (at least a part of) said flow signal flows via connection 30 to and is buffered in buffer/switch 24, in which in response to said indication signal a quality indicator is inserted (by adjusting like for example by adding or by amending/converting) into (at least a part of) said flow signal. So, buffer/switch 24 comprises an adjustor and/or an adjusting function. As a result said flow signal flows with a certain quality (delay and loss) to and through the Int(e)r(a)net 4.

According to the invention, the static behaviour of the network-unit (the specifier solely defines the quality) is improved and converted into a dynamic behaviour, by introducing memory 25, which stores flow-information of each flow signal. As a result, after detection of a specifier, processor 22 will order memory 25 to generate said flow-information of one or more previous flows (defined by the same or different but predefined specifier) which flow-information, which is supplied to processor 22, which will make a calculation, taking into account the detected specifier and the flow-information. As a result, either processor orders memory 25 to generate a new specifier which via bus 32 is supplied to generator 23, which then generates the indication signal in dependence of this new specifier, or processor 22 supplies the result of the calculation via control connection 36 to generator 23, which in this case retrieves the old specifier from bus 32, but now generates the indication signal in dependence of the old specifier and the result of the calculation. For both cases, the indication signal now is made history dependent.

According to a first possibility, the calculation is about the number of flow signals arrived per time-interval in session. When exceeding a first threshold, the indication signal to be generated could define a lower quality (higher delays and/or higher losses).

According to a second possibility, the calculation is about the number of flow signals arrived during a session (visit to same web site including several web pages). When exceeding a second threshold, the indication signal to be generated could define a higher quality (lower delays and/or lower losses).

According to a second embodiment, in access router 2, (at least a part of) said flow signal is buffered in buffer/switch 20. Processor 22 is informed via control connection 37, and controls detector 21 via control connection 35 in such a way that detector 21 starts detecting an specifier in said flow signal. Such a specifier for example corresponds with a classifier, an identifier, an address of a source or a destination, and can be found in each packet signal at certain byte locations, whereby either each packet signal comprises the entire specifier or subsequent packet signals of a flow signal comprise subsequent parts of a specifier. Detector 21 informs processor 22 via control connection 35 of said detection, and supplies said specifier to bus 32. Via control connection 36, processor 22 controls generator 23 in such a way that generator 23 reads the specifier from bus 32 and in response generates an indication signal, which however now, contrary to said first embodiment, according to this second embodiment is sent to a so-called QoS engine, generally a requestor which in dependence of said indication signal will make a request for a certain quality. Such a requestor can be located in the same network-unit or in one of the other ones.

In the mean time, processor 22 has controlled buffer/switch 20 via control connection 37 (and possibly buffer/switch 24 via control connection 38) in such a way that (at least a part of) said flow signal flows via connection 30 to connection 11 (possibly via buffer/switch 24). As a result said flow signal flows with a certain quality (delay and loss) to and through the Int(e)r(a)net 4.

According to the invention, the static behaviour of the network-unit (the specifier solely defines the quality) is improved and converted into a dynamic behaviour, by introducing memory 25, which stores flow-information of each flow signal. As a result, after detection of a specifier, processor 22 will order memory 25 to generate said flow-information of one or more previous flows (defined by the same or different but predefined specifier) which flow-information, which is supplied to processor 22, which will make a calculation, taking into account the detected specifier and the flow-information. As a result, either processor orders memory 25 to generate a new specifier which via bus 32 is supplied to generator 23, which then generates the indication signal in dependence of this new specifier, or processor 22 supplies the result of the calculation via control connection 36 to generator 23, which in this case retrieves the old specifier from bus 32, but now generates the indication signal in dependence of the old specifier and the result of the calculation. For both cases, the indication signal now is made history dependent.

According to a first possibility, the calculation is about the number of flow signals arrived per time-interval in a session. When exceeding a first threshold, the indication signal to be generated could define a lower quality (higher delays and/or higher losses).

According to a second possibility, the calculation is about the number of flow signals arrived during a session (visit to same web site including several web pages). When exceeding a second threshold, the indication signal to be generated could define a higher quality (lower delays and/or lower losses).

Each embodiment and/or each possibility can be combined with each other embodiment and/or each other possibility. Each part of access router 2, shown in the form of a block or not shown, can be 100% hardware, 100% software or a mixture of both. Therefore, a detector also comprises a detecting function, a generator also comprises a generating function. Each block shown or not shown can be integrated with each other block shown and/or not shown per access router 2, edge router 3, web server 1, but also per combinations of at least two of said access router 2, edge router 3 and web server 1. In addition to the memory shown, each block can have a further memory not shown for efficiency purposes.

The bus 32 may be replaced by separate connections, thereby for example introducing multiplexers and demultiplexers in detector 21, generator 23 and memory 25. Memory 25 can be for example a DPRAM, or a server controlled by processor 22 or a further processor not shown, or a combination of a memory and (de)multiplexer, etc. Detector 21 can be for example a comparator and/or have a comparing function, thereby receiving comparison values from processor 22. Generator 23 can be for example a converter and/or have a converting function, or a table memory generating output values in response to input values (specifier and possibly calculation result), etc. Buffer/switch 20 and 24 for example comprise a shift register and a processor/memory, etc. Althought just the downstream has been described, the invention may be used for an upstream as well.

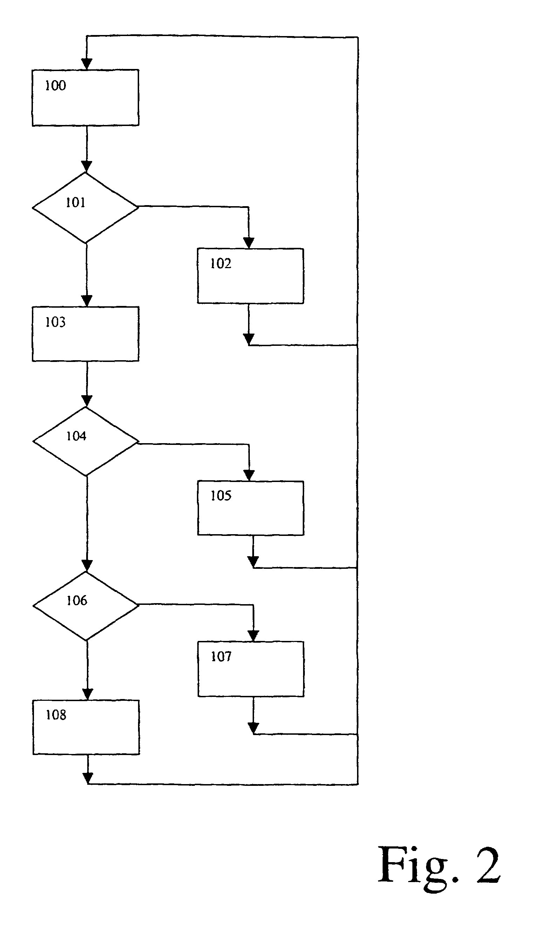

In the flow chart shown in figure 2 the blocks have the following meaning:
Block 100: Detect specifier after arrival of new packet signal, goto 101;
Block 101: Specifier known in memory? If yes, goto 103, if no, goto 102;
Block 102: Generate indication signal, goto 100;
Block 103: Let memory generate relevant flow-information, goto 104;
Block 104: Number of flow signals arrived per time-interval exceeding a first threshold? If yes, goto 106, if no, goto 105;
Block 105: Generate indication signal defining the same or a lower quality (higher delays and/or higher losses), goto 100;
Block 106: Number of flow signals arrived during a session exceeding a second threshold? If yes, goto 108, if no, goto 107;
Block 107: Generate indication signal defining the same quality, goto 100;
Block 108: Generate indication signal defining a higher quality (lower delays and/or lower losses), goto 100.

The method according to the invention and the computer program product according to the invention function as follows. After arrival of a new packet signal, the specifier is detected (Block 100). Is this specifier already known in the memory (Block 101)? If no, generate the standard indication signal for this specifier (Block 102). If yes, let the memory generate relevant flow-information (Block 103). Is the number of flow signals arrived per time-interval exceeding a first threshold (Block 104)? If no, generate the standard indication signal defining the same quality or a new indication signal defining a lower quality (higher delays and/or higher losses) (Block 105). If yes, Is the number of flow signals arrived during a session exceeding a second threshold (Block 106)? If no, generate the standard indication signal defining the same quality (Block 107). If yes, generate a new indication signal defining a higher quality (lower delays and/or lower losses) (Block 108).

For implementing this method according to the invention and/or this computer program product according to the invention, any programming language can be used. Of course, the flow chart in figure 2 is just an example, generally according to predefined rules and/or conditions and/or preferences, in view of one or more (possibly flexible and/or adaptable) thresholds, in dependence of detected specifiers, standard and/or new indication signals can be generated.

## Claims

1. Network-unit (2) for in response to a flow signal comprising packet signals generating an indication signal defining a quality for said flow signal, which network-unit (2) comprises a detector (21) for detecting a specifier in said flow signal and a generator (23) for generating said indication signal in dependence of said specifier, **characterised in that** said network-unit comprises a memory (25) for storing flow-information, with said generator (23) being coupled to said memory (25) for generating said indication signal further in dependence of flow-information of at least one previous flow signal thereby taking into account session histories and previous flow signals

2. Network-unit according (2) to claim 1, **characterised in that** said network-unit (2) comprises an adjustor (24) for in response to said indication signal adjusting a quality indicator in said flow signal.

3. Network-unit (2) according to claim 1, **characterised in that** said network-unit (2) comprises a requestor for in response to said indication signal requesting a certain quality for said flow signal.

4. Network-unit (2) according to claim 1, 2 or 3, **characterised in that** said flow-information comprises information about a number of flow signals per session.

5. Network-unit (2) according to claim 1, 2, 3 or 4, **characterised in that** said flow-information comprises information about a number of flow signals per time-interval in a session.

6. Network-unit (2) according to claim 4 or 5, **characterised in that** a quality comprises a delay factor and a loss factor.

7. Method for in response to a flow signal comprising packet signals generating an indication signal defining a quality for said flow signal, which method comprises a first step of detecting a specifier in said flow signal and a second step of generating said indication signal in dependence of said specifier, **characterised in that** said method comprises a third step of storing flow-information, with said generating of said indication signal further being in dependence of flow-information of at least one previous flow signal and taking into account session histories and previous flow signals

8. Method according to claim 7, **characterised in that** said flow-information comprises information about a number of flow signals per session.

9. Method according to claim 7 or 8, **characterised in that** said flow-information comprises information about a number of flow signals per time-interval in a session.

10. Computer program product comprising executable instructions which when executed by a computer cause that computer device to perform the method steps of: in response to a flow signal comprising packet signals generating an indication signal defining a quality for said flow signal, which computer program product comprises a first function of detecting a specifier in said flow signal and a second function of generating said indication signal in dependence of said specifier, **characterised in that** said computer program product comprises a third function of storing flow-information, with said generating of said indication signal further being in dependence of flow-information of at least one previous flow signal and taking into account session histories and previous flow signals.

## Patentansprüche

1. Netzwerkeinheit (2), die als Reaktion auf ein Fluss-Signal, das Paket-Signale enthält, ein Anzeigesignal erzeugt, das eine Qualität für das Fluss-Signal definiert, wobei die Netzwerkeinheit (2) einen Detektor (21) zur Erkennung eines Spezifizierers in dem Fluss-Signal und einen Generator (23) zur Erzeugung des Anzeigesignals in Abhängigkeit von dem Spezifizierer enthält, **dadurch gekennzeichnet, dass** die Netzwerkeinheit einen Speicher (25) zur Speicherung von Fluss-Information enthält, wobei der Generator (23) an den Speicher (25) gekoppelt ist, um das Anzeigesignal weiterhin in Abhängigkeit von Fluss-Informationen mindestens eines vorherigen Fluss-Signals zu erzeugen und dabei Sitzungs-Vorgeschichten und vorherige Fluss-Signale zu berücksichtigen.

2. Netzwerkeinheit (2) gemäß Anspruch 1, **dadurch gekennzeichnet, dass** die Netzwerkeinheit (2) einen Einsteller (24) enthält, um als Reaktion auf das Anzeigesignal eine Qualitäts-Anzeige in dem Fluss-Signal einzustellen.

3. Netzwerkeinheit (2) gemäß Anspruch 1, **dadurch gekennzeichnet, dass** die Netzwerkeinheit (2) einen Anforderer enthält, um als Reaktion auf das Anzeigesignal eine bestimmte Qualität für das Fluss-Signal anzufordern.

4. Netzwerkeinheit (2) gemäß Anspruch 1, 2 oder 3, **dadurch gekennzeichnet, dass** die Fluss-Information Informationen über eine Anzahl von Fluss-Signalen pro Sitzung enthält.

5. Netzwerkeinheit (2) gemäß Anspruch 1, 2, 3 oder 4, **dadurch gekennzeichnet, dass** die Fluss-Information Informationen über eine Anzahl von Fluss-Signalen pro Zeitintervall in einer Sitzung enthält.

6. Netzwerkeinheit (2) gemäß Anspruch 4 oder 5, **dadurch gekennzeichnet, dass** eine Qualität einen Verzögerungs-Faktor und einen Verlust-Faktor umfasst.

7. Verfahren, um als Reaktion auf ein Fluss-Signal, das Paket-Signale enthält, ein Anzeigesignal zu erzeugen, das eine Qualität für das Fluss-Signal definiert, wobei das Verfahren einen ersten Schritt der Erkennung eines Spezifizierers in dem Fluss-Signal und einen zweiten Schritt der Erzeugung des Anzeigesignals in Abhängigkeit von dem Spezifizierer enthält, **dadurch gekennzeichnet, dass** das Verfahren einen dritten Schritt der Speicherung von Fluss-Information enthält, wobei die Erzeugung des Anzeigesignals weiterhin in Abhängigkeit von Fluss-Informationen mindestens eines vorherigen Fluss-Signals erfolgt und dabei Sitzungs-Vorgeschichten und vorherige Fluss-Signale berücksichtigt werden.

8. Verfahren gemäß Anspruch 7, **dadurch gekennzeichnet, dass** die Fluss-Information Informationen über eine Anzahl von Fluss-Signalen pro Sitzung enthält.

9. Verfahren gemäß Anspruch 7 oder 8, **dadurch gekennzeichnet, dass** die Fluss-Information Informationen über eine Anzahl von Fluss-Signalen pro Zeitintervall in einer Sitzung enthält.

10. Computerprogrammprodukt, das ausführbare Anweisungen enthält, die wenn sie durch einen Computer ausgeführt werden bewirken, dass die Computer-Einrichtung die folgenden Schritte des Verfahrens ausführt: Als Reaktion auf ein Fluss-Signal, das Paket-Signale enthält, Erzeugung eines Anzeigesignals, das eine Qualität für das Fluss-Signal definiert, wobei das Computerprogrammprodukt eine erste Funktion der Erkennung eines Spezifizierers in dem Fluss-Signal und eine zweite Funktion der Erzeugung des Anzeigesignals in Abhängigkeit von dem Spezifizierer enthält, **dadurch gekennzeichnet, dass** das Computerprogrammprodukt eine dritte Funktion der Speicherung von Fluss-Information enthält, wobei die Erzeugung des Anzeigesignals weiterhin in Abhängigkeit von Fluss-Informationen mindestens eines vorherigen Fluss-Signals erfolgt und dabei Sitzungs-Vorgeschichten und vorherige Fluss-Signale berücksichtigt werden.

## Revendications

1. Unité réseau (2) pour, en réponse à un signal de débit comprenant des signaux de paquets, générer un signal d'indication définissant une qualité pour ledit signal de débit, ladite unité réseau (2) comprenant un détecteur (21) destiné à détecter un spécificateur dans ledit signal de débit et un générateur (23) destiné à générer ledit signal d'indication de manière dépendante audit spécificateur, **caractérisée en ce que** ladite unité réseau comprend une mémoire (25) destinée à stocker les informations de débit, ledit générateur (23) étant couplé à ladite mémoire (25) pour générer ledit signal d'indication en outre de manière dépendante par rapport aux informations de débit d'au moins un signal de débit précédent, prenant ainsi en compte les historiques de session et les signaux de débit précédents.

2. Unité réseau (2) selon la revendication 1, **caractérisée en ce que** ladite unité réseau (2) comprend un dispositif de réglage (24) pour, en réponse audit signal d'indication, ajuster un indicateur de qualité dans ledit signal de débit.

3. Unité réseau (2) selon la revendication 1, **caractérisée en ce que** ladite unité réseau (2) comprend un utilisateur final pour, en réponse audit signal d'indication, demander une certaine qualité pour ledit signal de débit.

4. Unité réseau (2) selon la revendication 1, 2 ou 3, **caractérisée en ce que** lesdites informations de débit comprennent des informations sur un nombre de signaux de débit par session.

5. Unité réseau (2) selon la revendication 1, 2, 3 ou 4, **caractérisée en ce que** lesdites informations de débit comprennent des informations portant sur un nombre de signaux de débit par intervalle de temps dans une session.

6. Unité réseau (2) selon la revendication 4 ou 5, **caractérisée en ce qu'**une qualité comprend un facteur de délai et un facteur de perte.

7. Procédé pour, en réponse à un signal de débit comprenant des signaux de paquets, générer un signal d'indication définissant une qualité pour ledit signal de débit, ledit procédé comprenant une première étape consistant à détecter un spécificateur dans ledit signal de débit et une deuxième étape consistant à générer ledit signal d'indication de manière dépendante par rapport audit spécificateur, **caractérisé en ce que** ledit procédé comprend une troisième étape consistant à stocker les informations de débit, ladite génération dudit signal d'indication étant, en outre, dépendante par rapport aux informations de débit d'au moins un signal de débit précédent et prenant en compte les historiques de session et les signaux de débit précédents.

8. Procédé selon la revendication 7, **caractérisé en ce que** lesdites informations de débit comprennent des informations sur un nombre de signaux de débit par session.

9. Procédé selon la revendication 7 ou 8, **caractérisé en ce que** lesdites informations de débit comprennent des informations sur un nombre de signaux de débit par intervalle de temps dans une session.

10. Produit de programme informatique comprenant des instructions exécutables qui, lorsqu'elles sont exécutées par un ordinateur, obligent ce dispositif informatique à effectuer les étapes du procédé consistant à, en réponse à un signal de débit comprenant des signaux de paquets, générer un signal d'indication définissant une qualité pour ledit signal de débit, ledit produit de programme informatique comprenant une première fonction consistant à détecter un spécificateur dans ledit signal de débit et une deuxième fonction consistant à générer ledit signal d'indication de manière dépendante par rapport audit spécificateur, **caractérisé en ce que** ledit produit de programme informatique comprend une troisième fonction consistant à stocker les informations de débit, ladite génération dudit signal d'indication étant, en outre, dépendante des informations de débit d'au moins un signal de débit précédent et prenant en compte les historiques de session et les signaux de débit précédents.
